# FASCICULE DE BREVET EUROPEEN

(11) **EP 4 154 628 B1**
(45) Date de publication et mention de la délivrance du brevet: **10.07.2024**
(21) Numéro de dépôt: 21725209.7
(22) Date de dépôt: 17.05.2021
(51) Int. Cl.: H04W 72/02, H04W 48/18, H04W 72/0453

(54) **SYSTÈME ET PROCÉDÉ PERMETTANT LA SÉLECTION PAR UN TERMINAL D'UNE BANDE FRÉQUENTIELLE OPTIMALE EN TERMES DE DÉBIT**
SYSTEM UND VERFAHREN ZUR AUSWAHL EINES OPTIMALEN FREQUENZBANDES HINSICHTLICH DER GESCHWINDIGKEIT UNTER VERWENDUNG EINES ENDGERÄTS
SYSTEM AND METHOD FOR SELECTING, USING A TERMINAL, AN OPTIMUM FREQUENCY BAND IN TERMS OF SPEED

(30) Priorité: 20.05.2020 FR 2005158
(43) Date de publication de la demande: 29.03.2023
(73) Titulaire: CentraleSupélec, 91190 - Gif sur Yvette (FR); Office National d'Etudes et de Recherches Aérospatiales, 91120 Palaiseau (FR)
(72) Inventeur: GUINVARC'H, Regis, 91190 Gif-Sur-Yvette (FR); HINOSTROZA, Israel, 91190 Gif-sur-Yvette (FR); AZARIAN, Sylvain, 91123 Palaiseau Cedex (FR)
(74) Mandataire: Cabinet Camus Lebkiri
(86) Numéro de dépôt international: PCT/EP2021/063019
(87) Numéro de publication internationale: WO 2021/233843

(56) Documents cités:
- US-A1- 2015 230 206
- US-A1- 2019 342 931

## Description

### DOMAINE TECHNIQUE DE L'INVENTION

Le domaine technique de l'invention est celui des réseaux de communication et en particulier celui de la sélection par un terminal, d'une bande de fréquences sur laquelle établir une communication au sein d'un réseau de communication.

La présente invention concerne un procédé permettant la sélection automatique par un terminal d'une bande fréquentielle optimale en termes de débit parmi un ensemble de bandes fréquentielles sélectionnables par le terminal. La présente invention concerne également un système permettant la mise en oeuvre d'un tel procédé.

### ARRIERE-PLAN TECHNOLOGIQUE DE L'INVENTION

Pour pouvoir échanger des données au sein d'un réseau de communication tel qu'un réseau de téléphonie mobile, un utilisateur via son terminal, établit une communication avec une station de base. La communication peut être établie sur un ensemble de bandes de fréquences défini en fonction du type de réseau : par exemple pour la 4G en France, la communication peut être établie sur cinq bandes de fréquences, la bande de fréquences B28, la bande de fréquences B20, la bande de fréquences B3, la bande de fréquences B1 et la bande de fréquences B7.

Classiquement, le terminal sélectionne automatiquement une des bandes de fréquences possibles en fonction de règles que lui a fournies la station de base et des conditions de réception radio sur ces bandes de fréquences. Ces règles ont été établies par les standards et sont paramétrables par l'opérateur du réseau de communication pour répartir aussi efficacement que possible les bandes de fréquences disponibles entre les nombreux utilisateurs du réseau de communication.

La sélection de la bande de fréquences par le terminal est donc en partie régie par des considérations de gestion interne du réseau de communication et non pas exclusivement par des considérations de performances optimales pour l'utilisateur. Ainsi, il n'est pas rare que le débit montant sur la bande de fréquences sélectionnée soit inférieur au débit montant que pourrait avoir le terminal s'il avait sélectionné une autre bande de fréquences.

Il existe donc un intérêt pour un terminal, de pouvoir sélectionner une bande de fréquences présentant un débit optimal sans avoir à modifier le fonctionnement des réseaux de communication actuels et celui du terminal.

Le document US 2015/230206 A1 divulgue un exemple de l'art antérieur.

Le document US 2019/342931 A1 divulgue un autre exemple de l'art antérieur.

### RESUME DE L'INVENTION

L'invention offre une solution aux problèmes évoqués précédemment, en permettant à un terminal de sélectionner automatiquement une bande de fréquences optimale en termes de débit parmi un ensemble de bandes de fréquences sélectionnables par le terminal sans le modifier, sans modifier son fonctionnement et sans modifier les règles et les paramètres de gestion du réseau de communication.

Un premier aspect de l'invention concerne un procédé permettant la sélection automatique par un terminal, d'une bande fréquentielle optimale en termes de débit parmi un ensemble de bandes fréquentielles sélectionnables par le terminal pour établir une communication avec une station de base, l'ensemble de bandes fréquentielles appartenant à un ensemble maximal de bandes fréquentielles connu, le terminal étant connecté à un système antennaire intelligent externe comportant au moins une antenne, un module d'atténuation et une carte système, le procédé comportant, après réception par le terminal d'au moins un message de la station de base comportant une pluralité de règles et de paramètres à appliquer par le terminal pour sélectionner une bande fréquentielle parmi l'ensemble de bandes fréquentielles, les étapes suivantes :
- Sélection par le terminal, d'une bande fréquentielle initiale parmi l'ensemble de bandes fréquentielles par application de la pluralité de règles et de paramètres ;
- Mesure d'un débit montant initial et d'un débit descendant initial par la carte système via le terminal sur la bande de fréquences initiale ;
- Choix du débit montant initial comme débit montant de référence et du débit descendant initial comme débit descendant de référence ;
- Application par le module d'atténuation, d'au moins une séquence de combinaisons d'atténuations à l'antenne, chaque combinaison d'atténuations comportant au moins une atténuation du gain de l'antenne sur une bande fréquentielle donnée de l'ensemble maximal de bandes fréquentielles :
   o Pour chaque combinaison d'atténuations appliquée, mesure d'un débit montant par la carte système via le terminal :
      - Si le débit montant mesuré est strictement supérieur à un seuil de débit montant dépendant du débit montant de référence, choix du débit montant mesuré comme débit montant de référence ;
- Si le débit montant de référence est supérieur au débit montant initial, application à l'antenne, de la combinaison d'atténuations correspondant au débit montant de référence par le module d'atténuation :
   o Mesure d'un débit descendant par la carte système via le terminal :
      - Si le débit descendant mesuré est supérieur ou égal à un seuil de débit descendant dépendant du débit descendant de référence, la combinaison d'atténuations appliquée correspond à la bande fréquentielle optimale en termes de débit.

Grâce à l'invention, des bandes de fréquences sont artificiellement atténuées pour diminuer le niveau de qualité du signal reçu sur ces bandes de fréquences. Le terminal, qui ne parvient donc plus à communiquer correctement sur ces bandes de fréquences, est alors contraint de sélectionner avec les règles de sélection et les paramètres qui lui ont été attribués, une bande de fréquences non ou moins atténuée.

La séquence de combinaisons d'atténuations permet donc de définir un ensemble de bandes fréquentielles que le terminal peut sélectionner en fonction des règles et paramètres de sélection, l'ensemble de bandes fréquentielles dépendant donc à la fois de la séquence de combinaisons d'atténuations, des règles et paramètres de sélection et de l'environnement radio auquel est exposé le terminal. L'ensemble de bandes fréquentielles est inconnu a priori et appartient ou est égal à un ensemble maximal de bandes fréquentielles connu comprenant toutes les bandes fréquentielles susceptibles d'être utilisées en fonction de la localisation et/ou du type de réseau de communication dans lequel se trouve le terminal.

En mesurant un débit montant pour chacune des bandes de fréquences sélectionnables grâce à la séquence de combinaisons d'atténuations, c'est-à-dire pour chacune des bandes de fréquences parmi l'ensemble de bandes fréquentielles, il est alors possible de déterminer la bande de fréquences présentant un débit montant optimal et d'amener le terminal à sélectionner et rester sur cette bande de fréquences en lui appliquant la combinaison d'atténuations correspondante. Une mesure de débit descendant est ensuite effectuée sur la bande de fréquences pour vérifier que le débit descendant est au moins égal au débit descendant initial. En effet, la mesure de débit descendant est la mesure de débit la plus gourmande en temps et en termes de données et c'est la raison pour laquelle la mesure du débit descendant n'est vérifiée qu'une fois à la fin pour minimiser la durée du procédé.

Ainsi, l'invention permet à un utilisateur de bénéficier d'un débit montant optimal, et peut par exemple améliorer significativement les solutions Très Haut Débit Radio alternatives aux points d'accès xDSL ou DOCSYS, en particulier dans le cas où le point d'accès est trop éloigné de son répartiteur et rencontre des problèmes de coupures et de débit récurrents.

Outre les caractéristiques qui viennent d'être évoquées dans le paragraphe précédent, le procédé selon le premier aspect de l'invention peut présenter une ou plusieurs caractéristiques complémentaires parmi les suivantes, considérées individuellement ou selon toutes les combinaisons techniquement possibles.

Selon un premier mode de réalisation, si l'ensemble de bandes fréquentielles comporte N bandes fréquentielles, la séquence de combinaisons d'atténuations comporte N combinaisons d'atténuations, chaque combinaison d'atténuations comporte N-1 atténuations appliquées sur des bandes fréquentielles de l'ensemble maximal de bandes fréquentielles différentes.

Ainsi, chaque combinaison d'atténuations est directement associée à une bande de fréquences donnée de l'ensemble maximal de bandes de fréquences et l'ensemble de bandes fréquentielles est égal à l'ensemble maximal de bandes fréquentielles.

Selon un deuxième mode de réalisation, chaque combinaison d'atténuations comporte au plus deux atténuations appliquées sur des bandes fréquentielles de l'ensemble maximal de bandes fréquentielles différentes.

Ainsi, le procédé selon l'invention peut être mis en oeuvre par un système antennaire intelligent selon l'invention comportant un certain type de modules d'atténuation ne pouvant atténuer que sur deux bandes de fréquences simultanément pour avoir une taille permettant au système antennaire intelligent de conserver un gain positif suffisant.

Le gain du système antennaire étant égal à la somme du gain de son antenne, supérieure à 6 dB dans un exemple de réalisation préféré, et des pertes d'insertion de son atténuateur c'est-à-dire à la perte de puissance du signal due à la connexion entre le système antennaire et le terminal, inférieures à 2 dB dans un exemple de réalisation préféré, on entend par « gain positif suffisant », un gain égal au minimum 4 dB sur l'ensemble des fréquences.

Selon une première variante de réalisation compatible avec le premier et le deuxième mode de réalisation, le procédé selon l'invention comporte en outre une étape d'identification de la bande fréquentielle optimale en termes de débit.

Selon une deuxième variante de réalisation compatible avec le premier et le deuxième mode de réalisation et avec la première variante de réalisation, le procédé selon l'invention est associé à au moins une information circonstancielle.

Ainsi, il est possible d'associer le débit montant optimal et le débit descendant associé à des informations circonstancielles, comme l'heure ou la localisation de la mesure de débit.

Selon une sous-variante de réalisation de la première et de la deuxième variantes de réalisation, le procédé selon l'invention comporte une étape de stockage de la bande fréquentielle optimale en termes de débit identifiée dans une base de données, la bande fréquentielle optimale en termes de débit étant associée à l'information circonstancielle dans la base de données.

Ainsi, il est possible de savoir pour une information circonstancielle donnée, la ou les bande(s) fréquentielle(s) optimale(s) en termes de débit les plus probables pour accélérer le procédé selon l'invention.

Selon une alternative de réalisation de la sous-variante de réalisation précédente, la séquence de combinaisons d'atténuations dépend de l'information circonstancielle associée ou de la ou des bande(s) fréquentielle(s) optimale(s) en termes de débit correspondant à l'information circonstancielle associée dans la base de données.

Ainsi, la séquence de combinaisons d'atténuations peut être modifiée pour accélérer le procédé en favorisant la ou les bande(s) fréquentielle(s) optimale(s) en termes de débit les plus probables.

Selon une alternative de réalisation compatible avec les modes de réalisation précédents, pour la bande fréquentielle initiale et pour chaque combinaison d'atténuations appliquée, le débit montant et/ou descendant est mesuré après un intervalle de temps prédéfini.

Ainsi, le terminal est stabilisé sur la bande de fréquence sélectionnée au moment de la mesure.

Selon une alternative de réalisation compatible avec les modes et alternatives de réalisation précédents, le procédé selon l'invention est réalisé dès qu'une condition de répétition est remplie, la condition dépendant d'une horloge, d'un changement d'environnement détectable ou d'une variation de débit significative par rapport à un débit attendu.

Ainsi, le procédé est répété périodiquement, à certains horaires, ou quand la mesure du débit est significativement altérée par rapport au débit attendu.

Selon une alternative de réalisation compatible avec les modes et alternatives de réalisation précédents, le procédé selon l'invention comporte une étape de forçage d'une sélection par le terminal, d'une bande fréquentielle parmi l'ensemble de bandes fréquentielles, après chaque application d'une combinaison d'atténuations.

Ainsi, l'étape de forçage est réalisée dans le cas où la sélection par le terminal d'une bande fréquentielle parmi l'ensemble de bandes fréquentielles n'est pas réalisée automatiquement après un changement des conditions radios créé par une combinaison d'atténuations appliquée.

Selon une sous-alternative de réalisation de l'alternative de réalisation précédente, le procédé selon l'invention comporte une étape d'arrêt de l'application de la combinaison d'atténuations appliquée après chaque étape de forçage.

Ainsi, la combinaison d'atténuations n'est pas maintenue une fois que le terminal a sélectionné la bande fréquentielle correspondante.

Un deuxième aspect de l'invention concerne un système pour la mise en oeuvre du procédé selon l'invention, comportant :
- un terminal comportant au moins un port antennaire configuré pour permettre un raccordement entre un système antennaire intelligent et le terminal ;
- un système antennaire intelligent comportant :
   o une antenne ;
   o un module d'atténuation comportant :
      - un atténuateur programmable configuré pour appliquer à l'antenne une séquence de combinaisons d'atténuations, chaque combinaison d'atténuations comportant au moins une atténuation du gain de l'antenne sur une bande fréquentielle donnée ;
      - un contrôleur configuré pour programmer l'atténuateur ;
   o une carte système configurée pour piloter le contrôleur et effectuer des mesures de débits montants et descendants via le terminal quand le système est connecté au terminal via le port antennaire.

Selon une alternative de réalisation, l'atténuateur comporte au moins un filtre coupe-bande à brin et au moins une diode PIN, le contrôleur étant configuré pour activer ou désactiver la diode PIN pour augmenter ou diminuer la longueur électrique du brin du filtre coupe-bande à brin.

Ainsi, il est possible de programmer l'atténuateur en modifiant la fréquence de résonance du filtre coupe-bande à brin et donc la fréquence d'atténuation par le filtre coupe-bande à brin, en modifiant la taille du brin via l'activation/désactivation de la diode PIN fonctionnant comme un interrupteur. Un tel atténuateur est caractérisé par de faibles pertes d'insertion, inférieures à 2 dB.

Selon une variante de réalisation de l'alternative de réalisation précédente, l'atténuateur comporte une pluralité de filtres coupe-bande à brin en série.

Ainsi, il est possible d'atténuer simultanément sur deux bandes de fréquences. Un tel atténuateur présente une taille permettant au système antennaire intelligent d'avoir un gain positif suffisant.

Selon une alternative de réalisation compatible avec l'alternative de réalisation précédente, l'antenne comporte :
- un élément antennaire à spirale large bande ;
- une alimentation configurée pour alimenter l'élément antennaire via un câble coaxial ;
- une cavité comportant l'élément antennaire et un trou traversant ;
le câble coaxial étant configuré pour passer par le trou de manière que l'alimentation soit à l'extérieur de la cavité.

Ainsi, l'antenne est large bande, elle couvre en particulier toutes les bandes fréquentielles haute fréquence utilisées pour la 4G ou la 5G, et plate et présente un coût de fabrication réduit. De plus, elle présente un gain positif supérieur à 6 dB.

Selon une variante de réalisation de l'alternative de réalisation précédente, l'alimentation comporte un balun infini.

Ainsi, l'alimentation est réalisée de façon coplanaire avec l'antenne, ce qui permet d'améliorer la compacité du système antennaire.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 est un schéma synoptique illustrant l'enchaînement des étapes du procédé selon l'invention.
- La figure 2 montre une représentation schématique du système selon l'invention connecté à un terminal communiquant avec une station de base.
- La figure 3 est une représentation schématique d'un premier mode de réalisation de l'élément antennaire du système selon l'invention.
- La figure 4 est une représentation schématique d'un premier mode de réalisation de l'atténuateur du système selon l'invention.
- La figure 5 est une représentation schématique d'une séquence de combinaisons d'atténuations selon un deuxième mode de réalisation du procédé selon l'invention.
- La figure 6 est un schéma synoptique illustrant l'étape d'identification de la bande fréquentielle de débit optimal associée à la séquence de combinaisons d'atténuations illustré à la figure 5.

### DESCRIPTION DETAILLEE

Sauf précision contraire, un même élément apparaissant sur des figures différentes présente une référence unique.

Un premier aspect de l'invention concerne un procédé permettant la sélection automatique, par un terminal, d'une bande fréquentielle de débit optimal, parmi un ensemble de bandes fréquentielles, afin d'établir une communication avec une station de base au sein d'un réseau de communication.

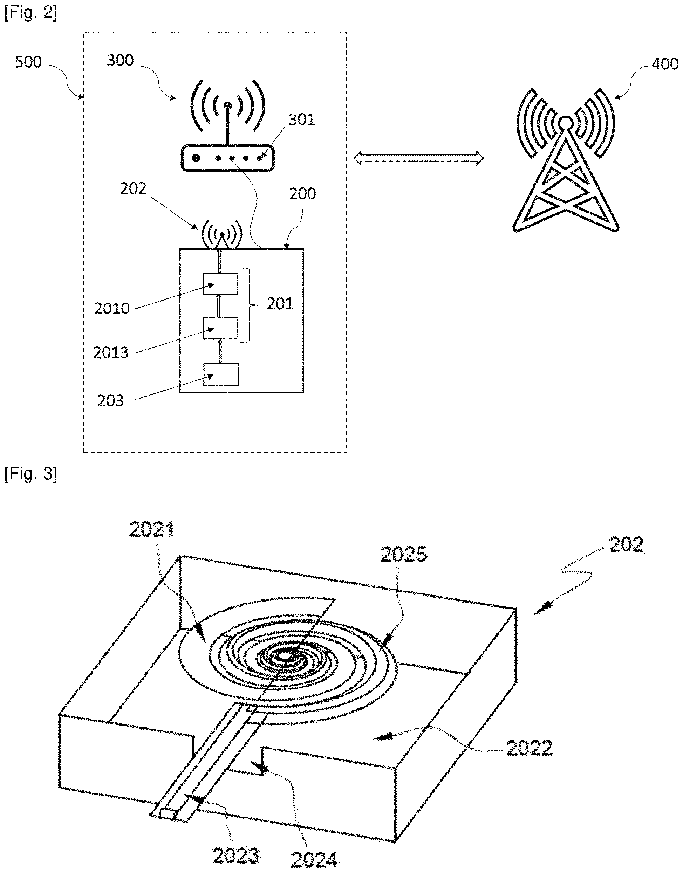

[Fig. 2] La figure 2 montre une représentation schématique du terminal 300 communiquant avec la station de base 400 au sein du réseau de communication.

Le terminal 300 est par exemple un téléphone mobile, comme un smartphone, un ordinateur, un routeur 4G ou encore une tablette. Sur la figure 2, le terminal 300 est un routeur 4G.

Le terminal 300 comporte au moins un port antennaire 301 configuré pour permettre un raccordement entre le système antennaire du terminal 300 et un système antennaire intelligent 200 externe au terminal, comme illustré sur la figure 2.

Le terminal 300 comporte un modem radio et des moyens de partage de connexion fixe ou sans fil pour se connecter à internet afin d'effectuer des mesures de débits montants et de débits descendants.

Dans le contexte de l'invention, on fait l'hypothèse que le terminal 300 est fixe.

Le réseau de communication est par exemple un réseau de téléphonie mobile, comme par exemple un réseau GSM (pour « Global System for Mobile Communications » ou 2G, un réseau UMTS (pour « Universal Mobile Télécommunications System ») ou 3G, ou encore un réseau LTE (pour « Long-Term Evolution ») ou 4G/5G.

Le procédé est réalisé après réception par le terminal 300, d'au moins un message de la station de base 400 comportant une pluralité de règles et de paramètres à appliquer par le terminal 300 pour sélectionner une bande fréquentielle parmi un ensemble maximal de bandes fréquentielles connu.

Le message est par exemple reçu à l'allumage du terminal 300.

L'ensemble maximal de bandes fréquentielles regroupe les différentes bandes fréquentielles pouvant être utilisées par le terminal 300 selon la localisation et/ou le type du réseau de communication.

Par exemple, en France, seulement six bandes de fréquences disposant d'une liaison montante sont utilisées pour les réseaux mobiles :
- la bande de fréquences B28 correspondant à 703-748 MHz en liaison montante et 758-803 MHz en liaison descendante ;
- la bande de fréquences B20 correspondant à 832-862 MHz en liaison montante et 791-821 MHz en liaison descendante ;
- la bande de fréquences B8 correspondant à 880-915 MHz en liaison montante et 925-960 MHz en liaison descendante ;
- la bande de fréquences B3 correspondant à 1710-1785 MHz en liaison montante et 1805-1880 MHz en liaison descendante ;
- la bande de fréquences B1 correspondant à 1920-1980 MHz en liaison montante et 2110-2170 MHz en liaison descendante ;
- la bande de fréquences B7 correspondant à 2500-2570 MHz en liaison montante et 2620-2690 MHz en liaison descendante.

L'ensemble maximal de bandes fréquentielles comporte donc en France les bandes fréquentielles B28, B20, B8, B3, B1 et B7.

Les bandes de fréquences B28, B20 et B8 sont qualifiées de bandes basse fréquence et les bandes de fréquences B3, B1, B7 de bandes haute fréquence.

On entend par « bande fréquentielle basse fréquence », une bande fréquentielle comportant des fréquences inférieures à 1000 MHz et par « bande fréquentielle haute fréquence », une bande fréquentielle comportant des fréquences supérieures à 1000 MHz.

Par exemple, sur un réseau 4G en France, la communication peut être établie sur cinq bandes de fréquences, B28, B20, B3, B1 et B7. L'ensemble maximal de bandes fréquentielles comporte donc les bandes fréquentielles B28, B20, B3, B1 et B7.

En pratique, les bandes de fréquences B28 et B20 ne peuvent pas être utilisées simultanément en 4G et l'ensemble maximal de bandes fréquentielles comporte donc les bandes fréquentielles B20, B3, B1 et B7 ou B28, B3, B1 et B7.

De manière générale, en France, pour les types de réseaux de communication les plus fréquemment déployés, l'ensemble maximal de bandes fréquentielles disponibles pour un terminal sur un type de réseau donné comporte au plus quatre bandes de fréquences, et plus particulièrement au plus une bande basse fréquence et au plus trois bandes haute fréquence.

Dans l'art antérieur, le terminal 300 est contraint de sélectionner une bande fréquentielle parmi l'ensemble maximal de bandes fréquentielles en appliquant les règles et paramètres de sélection reçus. La bande fréquentielle sélectionnée est donc exclusivement imposée par les conditions de réception radio environnantes, les règles standardisées et les paramètres de sélection déterminés par les opérateurs du réseau.

Dans l'invention, en appliquant une combinaison d'atténuations donnée qui va modifier les conditions de réception radio par le terminal 300 sur la bande fréquentielle imposée, le terminal 300 peut sélectionner une bande fréquentielle différente de la bande fréquentielle imposée. Les bandes fréquentielles sélectionnables par le terminal 300 grâce à l'application de la combinaison d'atténuations, sont regroupées dans un ensemble de bandes fréquentielles compris dans l'ensemble maximal de bandes fréquentielles. Une bande fréquentielle sélectionnée est donc imposée par les règles et les paramètres de sélection et éventuellement par une combinaison d'atténuations quand elle est appliquée.

L'ensemble de bandes fréquentielles, c'est-à-dire l'ensemble de bandes fréquentielles sélectionnables par le terminal 300, n'est pas connu a priori et dépend donc à la fois des règles et paramètres de sélection et de la séquence de combinaisons d'atténuations.

Dans la suite de la description, on utilisera indifféremment les termes de « bande de fréquences » et « bande fréquentielle ».

On entend par « sélection de la bande fréquentielle optimale en termes de débit ou de débit optimal, parmi un ensemble de bandes fréquentielles », la sélection de la bande fréquentielle de l'ensemble de bandes fréquentielles pour laquelle la communication présente le débit montant le plus élevé, par rapport aux débits montants sur les autres bandes fréquentielles de l'ensemble de bandes fréquentielles, et un débit descendant au moins égal au débit descendant sur la bande de fréquences sélectionnée par le terminal quand aucune combinaison d'atténuations n'est appliquée.

On entend par « débit montant », la quantité de données qui peuvent transiter par intervalle de temps sur la liaison montante, c'est-à-dire du terminal vers la station de base, et par « débit descendant », la quantité de données qui peuvent transiter par intervalle de temps sur la liaison descendante, c'est-à-dire de la station de base vers le terminal.

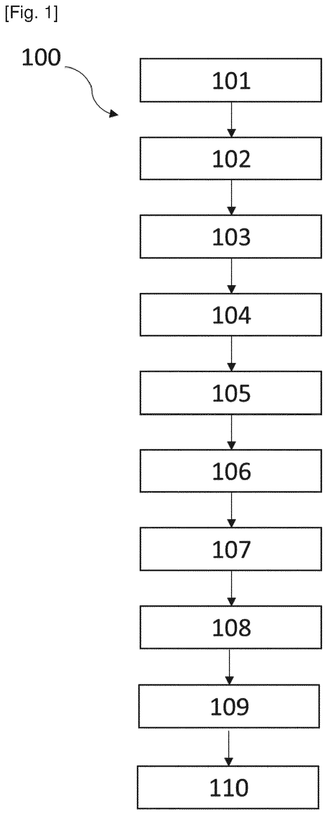

[Fig. 1] La figure 1 montre un schéma synoptique illustrant l'enchaînement des étapes du procédé 100 selon l'invention.

Un deuxième aspect de l'invention concerne un système 500 permettant la mise en oeuvre du procédé 100 selon l'invention.

Comme illustré sur la figure 2, le système 500 comporte :
- le terminal 300 ;
- un système antennaire intelligent 200.

Le système antennaire intelligent 200 est connecté au terminal 300 via le port antennaire 301.

On entend par « système intelligent », un système possédant les ressources électroniques ou informatiques nécessaires pour traiter, de manière autonome, des données recueillies ou reçues, et pour pouvoir utiliser l'information afin de commander des actions.

Comme illustré sur la figure 2, le système antennaire intelligent 200 comporte :
- une antenne 202 ;
- un module d'atténuation 201 ;
- une carte système 203.

Le module d'atténuation 201 est configuré pour appliquer une séquence de combinaisons d'atténuations à l'antenne 202.

La séquence de combinaisons d'atténuations comporte une pluralité de combinaisons d'atténuations.

Une combinaison d'atténuations comporte au moins une atténuation du gain de l'antenne 202 sur une bande fréquentielle de l'ensemble maximal de bandes fréquentielles.

Dans le cas où l'invention est appliquée dans un réseau 4G, une combinaison d'atténuations comporte par exemple une atténuation sur la bande de fréquences B3 et une atténuation sur la bande de fréquences B1.

[Fig. 3] La figure 3 est une représentation schématique d'un premier mode de réalisation de l'antenne 202 du système antennaire intelligent 200 selon l'invention.

Selon le premier mode de réalisation, l'antenne 202 comporte :
- un élément antennaire 2021 à spirale large bande ;
- une cavité 2022 comportant l'élément antennaire 2021 ;
- une alimentation configurée pour alimenter l'élément antennaire 2021, comportant par exemple un balun infini 2025, sur la figure 3, le balun infini 2025 est intégré à l'élément antennaire 2021 ;
- un câble coaxial 2023 équipé d'un connecteur coaxial, configuré pour relier l'élément antennaire 2021 à l'alimentation.

La cavité 2022 présente un trou 2024 traversant et le câble coaxial 2023 est configuré pour passer par le trou 3014 de manière que l'alimentation puisse être connectée au câble coaxial 2023 via son connecteur coaxial depuis l'extérieur de la cavité 2022.

Selon un deuxième mode de réalisation non représenté sur les figures, l'antenne 202 comporte un élément antennaire large bande, par exemple une antenne sinueuse ou une antenne Vivaldi, et une alimentation configurée pour alimenter l'élément antennaire.

Comme illustré sur la figure 2, le module d'atténuation 201 comporte :
- un atténuateur 2010 programmable configuré pour appliquer une séquence de combinaisons d'atténuations à l'antenne 202 ;
- un contrôleur 2013 configuré pour programmer l'atténuateur 2010, c'est-à-dire pour imposer à l'atténuateur 2010 la séquence de combinaisons d'atténuations à appliquer à l'antenne 202.

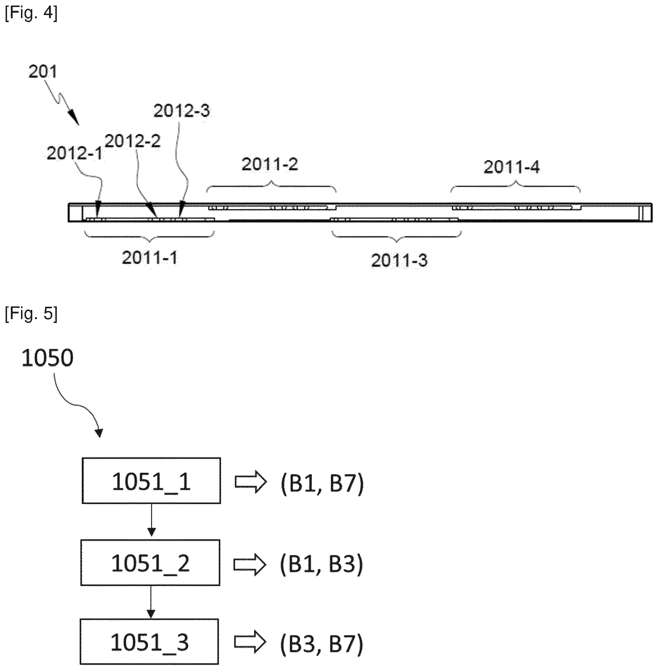

[Fig. 4] La figure 4 est une représentation schématique d'un premier mode de réalisation de l'atténuateur 2010 du système antennaire intelligent 200 selon l'invention.

Selon le premier mode de réalisation, l'atténuateur 2011 comporte au moins un filtre coupe-bande à brin, autrement appelé « spur-line » en anglais.

Sur la figure 4, l'atténuateur 2011 comporte quatre filtres coupe-bande à brin 2011-1, 2011-2, 2011-3, 2011-4 en série.

Chaque filtre coupe-bande à brin 2011-1, 2011-2, 2011-3, 2011-4 comporte au moins une diode PIN (pour « Positive Intrinsic Négative diode ») jouant le rôle d'interrupteur.

Sur la figure 4, chaque filtre coupe-bande à brin 2011-1, 2011-2, 2011-3, 2011-4 comporte trois diodes PIN 2012-1, 2012-2, 2012-3, uniquement identifiées sur le premier filtre coupe-bande à brin 2011-1.

Dans ce premier mode de réalisation, le contrôleur 2013 est configuré pour activer ou désactiver la ou les diodes PIN 2012-1, 2012-2, 2012-3 de chaque filtre coupe-bande à brin 2011-1, 2011-2, 2011-3, 2011-4 pour augmenter ou diminuer la longueur électrique du brin du filtre coupe-bande à brin 2011-1, 2011-2, 2011-3, 2011-4. Plus la taille du brin est réduite, plus la fréquence d'atténuation par le filtre coupe-bande à brin 2011-1, 2011-2, 2011-3, 2011-4 est importante.

Pour un filtre coupe-bande à brin 2011-1, 2011-2, 2011-3, 2011-4 donné présentant trois diodes PIN 2012-1, 2012-2, 2012-3, dans le cas où l'ensemble maximal de bandes de fréquences comporte une première, une deuxième et une troisième bandes de fréquences, le contrôleur 2013 peut par exemple atténuer sur la première bande de fréquences en activant les trois diodes PIN 2012-1, 2012-2, 2012-3, atténuer sur la deuxième bande de fréquences en activant deux des trois diodes PIN 2012-1, 2012-2, 2012-3 et atténuer sur la troisième bande de fréquences en activant une des trois diodes PIN 2012-1, 2012-2, 2012-3.

Un exemple de réalisation préféré de l'atténuateur 2011 selon le premier mode de réalisation est illustré sur la figure 4.

L'atténuateur 2011 selon l'exemple de réalisation préféré présente une surface environ deux fois inférieure à la surface de l'antenne 202 nécessaire pour obtenir un gain positif supérieure à 4 dB et un volume le plus réduit possible pour le système antennaire 200. Le volume du système antennaire intelligent 202 est par exemple compris dans un parallélépipède de volume 10 cm x 10 cm x 2.5 cm.

L'atténuateur 2011 selon l'exemple de réalisation préféré peut ainsi atténuer uniquement sur trois bandes de fréquences haute fréquence différentes, et pour obtenir un niveau d'atténuation suffisant pour une bande de fréquences donnée, c'est-à-dire d'au moins 15 dB, l'atténuateur 2011 ne peut atténuer que sur deux bandes fréquentielles différentes simultanément au maximum.

Selon un deuxième mode de réalisation non représenté sur les figures, l'atténuateur 2011 comporte pour chaque bande de fréquences de l'ensemble de bandes de fréquences, un filtre coupe-bande correspondant à la bande de fréquences. Les filtres coupe-bande de l'atténuateur 2011 sont montés en parallèle. Le filtre coupe-bande est par exemple un filtre en peigne, autrement appelé « hairpin filter » en anglais.

La carte système 203 est configurée pour piloter le contrôleur 2013 en lui envoyant des consignes de programmation.

La carte système 203 est également configurée pour réaliser des mesures de débits montants et de débits descendants via le terminal 300 raccordé au système antennaire intelligent 200, c'est-à-dire en se connectant à internet via les moyens de partage de connexion du terminal 300.

La carte système 203 est par exemple une carte système SoM (pour « System On Module »).

Une première étape 101 du procédé 100 consiste pour le terminal 300, à appliquer les règles et les paramètres reçus pour sélectionner une bande fréquentielle initiale parmi l'ensemble maximal de bandes fréquentielles.

Dans le cas où l'invention est appliquée dans un réseau 4G, la bande fréquentielle initiale est par exemple B7.

Une deuxième étape 102 du procédé 100 consiste pour la carte système 203, à mesurer un débit montant initial et un débit descendant initial sur la bande de fréquences initiale, via le terminal 300.

Le débit montant initial et le débit descendant initial peuvent être chacun mesurés après un intervalle de temps prédéfini.

L'intervalle de temps prédéfini est par exemple de quelques secondes.

Une troisième étape 103 du procédé 100 consiste à choisir le débit montant initial comme débit montant de référence et le débit descendant initial comme débit descendant de référence.

Une quatrième étape 104 du procédé 100 consiste pour le module d'atténuation 201, à appliquer une séquence de combinaisons d'atténuations à l'antenne 202.

Lors de la quatrième étape 104, la séquence de combinaisons d'atténuations peut être appliquée une pluralité de fois.

Les combinaisons d'atténuations sont appliquées successivement par le module d'atténuation 201.

La séquence de combinaisons d'atténuations peut dépendre d'au moins une information circonstancielle associée au procédé 100 selon l'invention.

L'information circonstancielle est par exemple l'heure à laquelle le procédé 100 est réalisée ou la localisation du terminal 300.

Pour chaque combinaison d'atténuations, une cinquième étape 105 et une sixième étape 106 du procédé 100 sont réalisées.

La cinquième étape 105 du procédé 100 consiste pour la carte système 203, à mesurer, via le terminal 300, un débit montant sur la bande de fréquences sélectionnée par le terminal 300 correspondant à la combinaison d'atténuations appliquée par le module d'atténuation 201.

Le débit montant peut être mesuré après un intervalle de temps prédéfini.

Si le terminal 300 ne resélectionne pas automatiquement une bande fréquentielle parmi l'ensemble de bandes fréquentielles après l'application de la combinaison d'atténuations, la cinquième étape 105 est précédée d'une étape de forçage d'une sélection par le terminal 300 d'une bande fréquentielle parmi l'ensemble de bandes fréquentielles.

L'étape de forçage est par exemple réalisée en désactivant puis réactivant le modem du terminal 300.

Une fois l'étape de forçage réalisée, il est possible d'arrêter l'application de la combinaison d'atténuations.

La sixième étape 106 du procédé 100 consiste à comparer le débit montant mesuré à la cinquième étape 105 à un seuil de débit montant dépendant du débit montant de référence, et de choisir le débit montant mesuré comme débit montant de référence si le débit montant mesuré est strictement supérieur au seuil de débit montant.

Le seuil de débit montant est par exemple égal à la somme du débit montant de référence et d'un seuil de tolérance.

Le seuil de tolérance est par exemple égal à 5% du débit montant de référence.

Le seuil de débit montant est par exemple égal au débit montant de référence.

La séquence de combinaisons d'atténuations permet de sélectionner par élimination successive la bande de fréquences optimale en termes de débit pour le terminal 300 parmi l'ensemble de bandes fréquentielles.

La séquence de combinaisons d'atténuations peut dépendre du débit montant mesuré à chaque combinaison d'atténuations et plus particulièrement de la comparaison entre les débits montants de deux combinaisons d'atténuations différentes.

Par exemple, la séquence de combinaisons d'atténuations comporte une première combinaison d'atténuations pour laquelle un premier débit montant est mesuré et une deuxième combinaison d'atténuations pour laquelle un deuxième débit montant est mesuré. Si le premier débit montant mesuré est supérieur au deuxième débit montant mesuré, la séquence de combinaisons d'atténuations comporte une troisième combinaison d'atténuations alors que si le premier débit montant mesuré est inférieur au deuxième débit montant mesuré, la séquence de combinaisons d'atténuations comporte une quatrième combinaison d'atténuations, la troisième combinaison d'atténuations étant différente de la quatrième combinaison d'atténuations.

Selon un premier mode de réalisation, si l'ensemble maximal de bandes fréquentielles comporte N bandes fréquentielles, la séquence de combinaisons d'atténuations comporte N combinaisons d'atténuations et chaque combinaison d'atténuations comporte N-1 atténuations appliquées sur des bandes fréquentielles de l'ensemble maximal de bandes fréquentielles différentes.

Le premier mode de réalisation correspond à un cas où les capacités du système antennaire intelligent 200 ne limitent pas le nombre de bandes de fréquences pouvant être atténuées simultanément. Le premier mode de réalisation ne peut donc pas être mis en oeuvre par le système antennaire intelligent 200 présentant un atténuateur 2011 selon l'exemple de réalisation préféré.

Dans le cas où l'invention est appliquée dans un réseau 4G en France et que la bande de fréquences B28 n'est pas exploitée, l'ensemble maximal de bandes fréquentielles comporte 4 bandes fréquentielles, B20, B3, B1, B7.

Dans le premier mode de réalisation, chaque combinaison d'atténuations comporte 3 atténuations appliquées sur des bandes fréquentielles de l'ensemble maximal de bandes fréquentielles différentes.

Par exemple, la séquence de combinaisons d'atténuations comporte :
- une première combinaison d'atténuations comportant une atténuation sur la bande de fréquences B20, une atténuation sur la bande de fréquences B3 et une atténuation sur la bande de fréquences B1, ce qui force le terminal 300 à sélectionner la bande de fréquences B7 ;
- une deuxième combinaison d'atténuations comportant une atténuation sur la bande de fréquences B3, une atténuation sur la bande de fréquences B1 et une atténuation sur la bande de fréquences B7, ce qui force le terminal 300 à sélectionner la bande de fréquences B20 ;
- une troisième combinaison d'atténuations comportant une atténuation sur la bande de fréquences B20, une atténuation sur la bande de fréquences B1 et une atténuation sur la bande de fréquences B7, ce qui force le terminal 300 à sélectionner la bande de fréquences B3 ;
- une quatrième combinaison d'atténuations comportant une atténuation sur la bande de fréquences B20, une atténuation sur la bande de fréquences B3 et une atténuation sur la bande de fréquences B7, ce qui force le terminal 300 à sélectionner la bande de fréquences B1.

Selon un deuxième mode de réalisation, chaque combinaison d'atténuations comporte au plus deux atténuations appliquées sur des bandes fréquentielles de l'ensemble maximal de bandes fréquentielles différentes.

Le deuxième mode de réalisation correspond à un cas où les capacités du système antennaire intelligent 200 limitent à deux le nombre de bandes de fréquences pouvant être atténuées simultanément. Le deuxième mode de réalisation peut donc être mis en oeuvre par le système antennaire intelligent 200 présentant un atténuateur 2011 selon l'exemple de réalisation préféré.

[Fig. 5] La figure 5 est une représentation schématique d'un exemple de séquence 1050 de combinaisons d'atténuations pour le deuxième mode de réalisation du procédé 100 selon l'invention.

Dans le cas où l'invention est appliquée dans un réseau 4G en France et que la bande de fréquences B28 n'est pas exploitée, l'ensemble maximal de bandes fréquentielles comporte 4 bandes fréquentielles, B20, B3, B1, B7.

Pour pouvoir être mise en oeuvre par l'atténuateur 2011 selon l'exemple de réalisation préféré, la séquence de combinaisons d'atténuations peut uniquement comporter des atténuations sur les bandes de fréquences haute fréquence B3, B1 et B7.

Comme illustré sur la figure 5, la séquence 1050 de combinaisons d'atténuations peut comporter :
- une première combinaison d'atténuations 1051_1 comportant une atténuation de la bande de fréquences de B1 et une atténuation de la bande de fréquences de B7. Une fois cette première combinaison d'atténuations 1051_1 appliquée, le terminal 300 sélectionne plus probablement une bande de fréquences non atténuée, à savoir la bande de fréquences B20 ou la bande de fréquences B3 ;
- une deuxième combinaison d'atténuations 1051_2 comportant une atténuation de la bande de fréquences de B1 et une atténuation de la bande de fréquences de B3. Une fois cette première combinaison d'atténuations 1051_1 appliquée, le terminal 300 sélectionne plus probablement une bande de fréquences non atténuée, à savoir la bande de fréquences B20 ou la bande de fréquences B7 ;
- une troisième combinaison d'atténuations 1051_3 comportant une atténuation de la bande de fréquences de B3 et une atténuation de la bande de fréquences de B7. Une fois cette première combinaison d'atténuations 1051_1 appliquée, le terminal 300 sélectionne plus probablement une bande de fréquences non atténuée, à savoir la bande de fréquences B20 ou la bande de fréquences B1.

Comme la bande de fréquences B20 est basse fréquence, elle est moins probablement sélectionnée qu'une bande de fréquences haute fréquence. En effet, deux raisons peuvent l'expliquer.

Une première raison est que l'antenne 202 utilisée n'amplifie pas les bandes de fréquences basse fréquence correspondant à un gain négatif, contrairement aux bandes de fréquences haute fréquence correspondant à un gain positif, et en particulier à un gain positif supérieur à 6 dB.

Une deuxième raison est que le paramétrage des opérateurs pour le processus de sélection favorise en général la sélection des bandes fréquentielles haute fréquence car les bandes fréquentielles basse fréquence sont les plus couvrantes et les plus faibles en termes de bande passante, et sont donc réservées en priorité aux terminaux qui n'ont pas accès aux autres fréquences.

Ainsi, une fois la première combinaison d'atténuations 1051_1 appliquée, le terminal 300 sélectionne plus probablement encore la bande de fréquences B3, une fois la deuxième combinaison d'atténuations 1051_2 appliquée, le terminal 300 sélectionne plus probablement encore la bande de fréquences B7 et une fois la troisième combinaison d'atténuations 1051_3 appliquée, le terminal 300 sélectionne plus probablement encore la bande de fréquences B1.

En reprenant l'exemple du premier mode de réalisation, la cinquième étape 105 est réalisée pour la première combinaison d'atténuations, ce qui permet d'obtenir un premier débit montant que l'on peut associer à la bande de fréquences B7, puis la cinquième étape 105 est réalisée pour la deuxième combinaison d'atténuations, ce qui permet d'obtenir un deuxième débit montant que l'on peut associer à la bande de fréquences B20, puis la cinquième étape 105 est réalisée pour la troisième combinaison d'atténuations, ce qui permet d'obtenir un troisième débit montant que l'on peut associer à la bande de fréquences B3, et enfin la cinquième étape 105 est réalisée pour la quatrième combinaison d'atténuations, ce qui permet d'obtenir un quatrième débit montant que l'on peut associer à la bande de fréquences B1.

Si l'on se place dans le cas où le terminal 300 avait sélectionné la bande de fréquences B7 comme bande de fréquences initiale, ce que l'on ignore à priori, et que la bande de fréquences B1 est la bande de fréquences de débit montant optimal que l'on cherche à déterminer par le procédé 100, lors de la sixième étape 106 réalisée pour la première combinaison d'atténuations, le premier débit montant est égal au débit montant de référence lui-même égal au débit montant initial. Le débit montant de référence n'est donc pas modifié. Si le deuxième débit montant et le troisième débit montant sont inférieurs au débit montant initial, le débit montant de référence n'est pas non plus modifié lors de la sixième étape 106 réalisée pour la deuxième combinaison d'atténuations et lors de la sixième étape 106 réalisée pour la troisième combinaison d'atténuations. Lors de la sixième étape 106 réalisée pour la quatrième combinaison d'atténuations, le quatrième débit montant est strictement supérieur au seuil de débit montant égal ici au débit montant de référence. Le débit montant de référence est donc mis à jour avec la valeur du quatrième débit montant.

Comme toutes les combinaisons d'atténuations de la pluralité de combinaisons d'atténuations ont été appliquées, la valeur finale du débit montant de référence est la valeur du quatrième débit montant correspondant à la quatrième combinaison d'atténuations.

Le procédé 100 selon l'invention peut comporter en outre une septième étape 107 d'identification de la bande fréquentielle optimale en termes de débit.

Dans l'exemple du premier mode de réalisation, la bande fréquentielle optimale en termes de débit peut être directement identifiée puisque chaque combinaison d'atténuations force le terminal 300 à sélectionner une bande de fréquences donnée. Ainsi, la bande fréquentielle optimale en termes de débit est la bande de fréquences associée au quatrième débit montant, à savoir la bande de fréquences B1.

Dans le deuxième mode de réalisation, la bande fréquentielle optimale en termes de débit ne peut pas être directement identifiée puisqu'une combinaison d'atténuations donnée ne force pas le terminal 300 à sélectionner une bande de fréquences donnée. La septième étape 107 comporte alors pour chaque combinaison d'atténuations, au moins une étape de comparaison entre le débit montant mesuré pour la combinaison d'atténuations et un autre débit montant mesuré pour une autre combinaison d'atténuations de la séquence de combinaisons d'atténuations ou en l'absence d'application d'une combinaison d'atténuations.

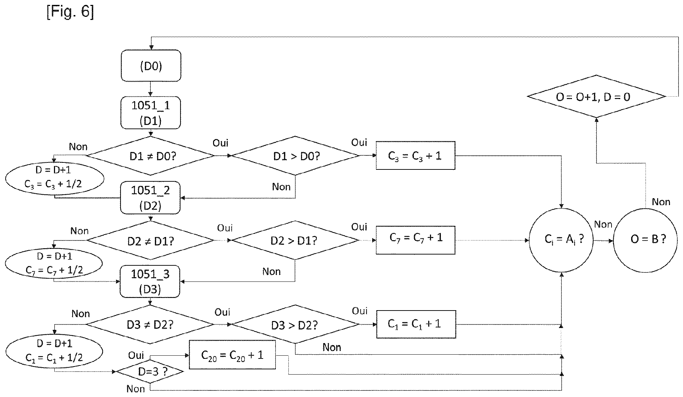

[Fig. 6] La figure 6 est un schéma synoptique illustrant la septième étape 107 du procédé 100 associée à la séquence de combinaisons d'atténuations illustré à la figure 5.

Au début de la septième étape 107, un compteur D de mesures de débit, un compteur O de boucles, un compteur C₃ associé à la bande de fréquences B3, un compteur C₇ associé à la bande de fréquences B7, un compteur C₁ associé à la bande de fréquences B1, un compteur C₂₀ associé à la bande de fréquences B20 sont initialisés à zéro.

Un débit montant D0 est ensuite mesuré, quand aucune combinaison d'atténuations n'est appliquée. Le premier débit montant D0 mesuré peut être le débit montant initial mesuré à la deuxième étape 102.

La première combinaison d'atténuations 1051_1 est ensuite appliquée et un premier débit montant D1 est mesuré.

Le premier débit montant D1 est ensuite comparé au débit montant D0 :
- Si le premier débit montant D1 est supérieur au débit montant D0, le compteur C3 est incrémenté de 1 puis est comparé à un seuil A3 associé à la bande de fréquences B3 :
   o Si le compteur C3 est égal au compteur A3, la bande de fréquences optimale en termes de débit est la bande de fréquences B3 ;
   o Si le compteur C3 est inférieur au compteur A3, le compteur O est comparé à un seuil B de boucle :
      - Si le compteur O est égal au seuil B, la bande de fréquences optimale en termes de débit est la bande de fréquences Bi associée au compteur Ci de valeur la plus élevée ;
      - Si le compteur O est inférieur au seuil B, le compteur O est incrémenté de 1, le compteur D est remis à zéro, une nouvelle mesure de débit montant D0 est réalisée et la première combinaison d'atténuations 1051_1 est appliquée à nouveau.
- Si le premier débit montant D1 est égal au débit montant D0, le compteur D est incrémenté de 1, le compteur C3 est incrémenté de ½ et l'on applique la deuxième combinaison d'atténuations 1051_2 ;
- Si le premier débit montant D1 est inférieur au débit montant D0, on applique la deuxième combinaison d'atténuations 1051_2.

La deuxième combinaison d'atténuations 1051 _2 est ensuite appliquée et un deuxième débit montant D2 est mesuré.

Le deuxième débit montant D2 est ensuite comparé au premier débit montant D1 :
- Si le deuxième débit montant D2 est supérieur au premier débit montant D1, le compteur C7 est incrémenté de 1 puis est comparé à un seuil A7 associée à la bande de fréquences B7 :
   o Si le compteur C7 est égal au compteur A7, la bande de fréquences optimale en termes de débit est la bande de fréquences B7 ;
   o Si le compteur C7 est inférieur au compteur A7, le compteur O est comparé à un seuil B de boucle :
      - Si le compteur O est égal au seuil B, la bande de fréquences optimale en termes de débit est la bande de fréquences Bi associée au compteur Ci de valeur la plus élevée ;
      - Si le compteur O est inférieur au seuil B, le compteur O est incrémenté de 1, le compteur D est remis à zéro, une nouvelle mesure de débit montant D0 est réalisée et la première combinaison d'atténuations 1051_1 est appliquée à nouveau.
- Si le deuxième débit montant D2 est égal au premier débit montant D1, le compteur D est incrémenté de 1, le compteur C7 est incrémenté de ½ et l'on applique la troisième combinaison d'atténuations 1051_3 ;
- Si le premier débit montant D1 est inférieur au débit montant D0, on applique la troisième combinaison d'atténuations 1051_3.

La troisième combinaison d'atténuations 1051_3 est ensuite appliquée et un troisième débit montant D3 est mesuré.

Le troisième débit montant D3 est ensuite comparé au deuxième débit montant D2 :
- Si le troisième débit montant D3 est supérieur au deuxième débit montant D2, le compteur C1 est incrémenté de 1 puis est comparé à un seuil A1 associée à la bande de fréquences B1 :
   o Si le compteur C1 est égal au compteur A1, la bande de fréquences optimale en termes de débit est la bande de fréquences B1 ;
   o Si le compteur C1 est inférieur au compteur A1, le compteur O est comparé à un seuil B de boucle :
      - Si le compteur O est égal au seuil B, la bande de fréquences optimale en termes de débit est la bande de fréquences Bi associée au compteur Ci de valeur la plus élevée ;
      - Si le compteur O est inférieur au seuil B, le compteur O est incrémenté de 1, le compteur D est remis à zéro, une nouvelle mesure de débit montant D0 est réalisée et la première combinaison d'atténuations 1051_1 est appliquée à nouveau.
- Si le troisième débit montant D3 est égal au deuxième débit montant D2, le compteur D est incrémenté de 1, le compteur C1 est incrémenté de ½ et l'on compare le compteur D à la valeur 3 :
   o Si le compteur D vaut 3, le compteur C20 est incrémenté de 1.
- Le compteur C20 est ensuite comparé à un seuil A20 associé à la bande de fréquences B20 :
   o Si le compteur C20 est égal au compteur A20, la bande de fréquences optimale en termes de débit est la bande de fréquences B20 ;
   o Si le compteur C20 est inférieur au compteur A20, le compteur O est comparé à un seuil B de boucle :
      - Si le compteur O est égal au seuil B, la bande de fréquences optimale en termes de débit est la bande de fréquences Bi associée au compteur Ci de valeur la plus élevée ;
      - Si le compteur O est inférieur au seuil B, le compteur O est incrémenté de 1, le compteur D est remis à zéro, une nouvelle mesure de débit montant D0 est réalisée et la première combinaison d'atténuations 1051_1 est appliquée à nouveau.

La septième étape 107 est donc interrompue quand la probabilité associée à une bande de fréquences Bi donnée, représentée par le compteur Ci, est suffisante, c'est-à-dire égale au seuil Ai, ou que la séquence de combinaisons d'atténuations a été appliquée suffisamment de fois, c'est-à-dire que le compteur O de boucle est égal au seuil B de boucle.

Les seuils Ai et B dépendent par exemple de l'information circonstancielle.

Les seuils Ai et B peuvent avoir une valeur réduite, par exemple respectivement une valeur 2 et une valeur 4, si la bande de fréquences de débit optimal est déjà connue pour la même heure et la même période saisonnière suite à des mesures précédentes stables.

Les seuils Ai et B peuvent avoir une valeur plus importante, par exemple respectivement une valeur 5 et une valeur 7, aux périodes de transitions saisonnières par exemple ou à la mise en service d'un nouveau système antennaire intelligent.

De manière générale, les seuils Ai et B ont par exemple respectivement une valeur 4 et une valeur 5.

Le procédé 100 peut alors comporter en outre une huitième étape 108 consistant à stocker la bande fréquentielle optimale en termes de débit identifiée à la septième étape 107 dans une base de données.

Dans la base de données, la bande fréquentielle optimale en termes de débit est par exemple associée à l'information circonstancielle correspondant au procédé 100.

Par exemple, si l'information circonstancielle est l'heure à laquelle le procédé 100 est réalisé et que le procédé 100 est réalisé à 17h30, en reprenant l'exemple précédent du premier mode de réalisation dans lequel la bande fréquentielle optimale en termes de débit est la bande de fréquences B1, la bande de fréquences B1 est associée à 17h30 dans la base de données.

La base de données stocke par exemple la bande fréquentielle optimale en termes de débit pour chaque réalisation du procédé 100.

Pour une réalisation du procédé 100 donnée, la séquence de combinaisons d'atténuations peut dépendre de la ou des bande(s) fréquentielle(s) optimale(s) en termes de débit correspondant à l'information circonstancielle associée au procédé 100 dans la base de données.

En reprenant l'exemple précédent si le procédé 100 est associé à l'information circonstancielle 17h30, comme la base de données comporte la bande de fréquences B1 associée à 17h30, la séquence de combinaisons d'atténuations peut par exemple être choisie pour tester la bande de fréquences B1 en premier.

Ainsi, en reprenant l'exemple du deuxième mode de réalisation, la troisième combinaison d'atténuations 1051_3 pour laquelle la bande de fréquences B1 a le plus de chance d'être sélectionnée par le terminal 300, peut être placée en premier dans la séquence de combinaisons d'atténuations.

Le seuil A₁ associé à la bande de fréquences B1 peut également être diminué par rapport aux autres seuils Aᵢ.

Une neuvième étape 109 du procédé 100 consiste alors à appliquer à l'antenne 202 par le biais du module d'atténuation 201, la combinaison d'atténuations correspondant au débit montant de référence.

Dans l'exemple du premier mode de réalisation, la neuvième étape 109 consiste à appliquer la quatrième combinaison d'atténuations à l'antenne 202.

La neuvième étape 109 est uniquement réalisée dans le cas où le débit montant de référence est supérieur au débit montant initial, puisque si le débit montant initial est le débit montant optimal, le terminal 300 sélectionne la bande de fréquences de débit montant optimal sans avoir besoin d'appliquer de combinaisons d'atténuations au système antennaire 301 du terminal 300.

Si le terminal 300 ne resélectionne pas automatiquement une bande fréquentielle parmi l'ensemble de bandes fréquentielles après l'application de la combinaison d'atténuations correspondant au débit montant de référence, la neuvième étape 109 est précédée d'une étape de forçage d'une sélection par le terminal 300 d'une bande fréquentielle parmi l'ensemble de bandes fréquentielles.

Une fois l'étape de forçage réalisée, il est possible d'arrêter l'application de la combinaison d'atténuations correspondant au débit montant de référence.

Une dixième étape 110 du procédé 100 consiste ensuite à mesurer un débit descendant et à le comparer à un seuil de débit descendant dépendant du débit descendant de référence.

Si le débit descendant mesuré est supérieur ou égal au seuil de débit descendant, la combinaison d'atténuations appliquée correspond à la bande fréquentielle optimale en termes de débit.

Si le débit descendant mesuré est inférieur au seuil de débit descendant, on s'intéresse à la bande de fréquences ayant donné le deuxième meilleur débit montant, c'est-à-dire le débit montant parmi les débits montants mesurés à la cinquième étape 105 du procédé 100, le plus élevé après le débit montant de référence obtenu après l'application de la séquence de combinaisons d'atténuations. Si cette bande de fréquences est la bande de fréquences initiale, la bande fréquentielle initiale correspond à la bande fréquentielle optimale en termes de débit. Si cette bande de fréquences est différente de la bande de fréquences initiale, on réalise la neuvième étape 109 et la dixième étape du procédé 100 pour la combinaison d'atténuations correspondant à cette bande de fréquences, et ainsi de suite jusqu'à ce que le débit descendant mesuré à la dixième étape 110 soit supérieur ou égal au seuil de débit descendant.

Le seuil de débit descendant est par exemple égal à la somme du débit descendant de référence et d'un seuil de tolérance.

Le seuil de tolérance est par exemple égal à 5% du débit descendant de référence.

Le seuil de débit descendant est par exemple égal au débit descendant de référence.

Le procédé 100 est réalisé dès qu'une condition de répétition est remplie.

La condition de répétition est par exemple liée à une horloge. Dans ce cas, le procédé 100 est par exemple réalisé périodiquement, tous les T tops d'horloge ou à certains horaires prédéterminés.

La condition de répétition est par exemple liée à un changement d'environnement détectable, par exemple saisonnier, notamment lors des vacances scolaires.

La condition de répétition est par exemple liée à une variation de débit significative par rapport à un débit attendu. Le débit attendu est par exemple égal à un débit moyen obtenu lors d'une première réalisation du procédé 100 réalisée à l'allumage du terminal 300 appelée phase de calibration.

## Revendications

1. Procédé (100) permettant la sélection automatique par un terminal (300) d'une bande fréquentielle optimale en termes de débit parmi un ensemble de bandes fréquentielles sélectionnables par le terminal (300) pour établir une communication avec une station de base (400), l'ensemble de bandes fréquentielles appartenant à un ensemble maximal de bandes fréquentielles connu, le terminal (300) est connecté à un système antennaire intelligent (200) externe comportant au moins une antenne (202), un module d'atténuation (201) et une carte système (203) et en ce que le procédé (100) comporte, après réception par le terminal (300) d'au moins un message de la station de base (400) comportant une pluralité de règles et de paramètres à appliquer par le terminal (300) pour sélectionner une bande fréquentielle parmi l'ensemble de bandes fréquentielles, les étapes suivantes :
- Sélection par le terminal (300), d'une bande fréquentielle initiale parmi l'ensemble de bandes fréquentielles par application de la pluralité de règles et de paramètres (101) ;
- Mesure d'un débit montant initial et d'un débit descendant initial par la carte système (203) via le terminal (300) sur la bande de fréquences initiale (102) ;
- Choix du débit montant initial comme débit montant de référence et du débit descendant initial comme débit descendant de référence (103) ;
- Application par le module d'atténuation (201), d'au moins une séquence (1050) de combinaisons d'atténuations (1051_1, 1051_2, 1051_3) à l'antenne (202), chaque combinaison d'atténuations (1051_1, 1051_2, 1051 _3) comportant au moins une atténuation du gain de l'antenne (202) sur une bande fréquentielle donnée de l'ensemble maximal de bandes fréquentielles (104) :
∘ Pour chaque combinaison d'atténuations (1051_1, 1051_2, 1051_3) appliquée, mesure d'un débit montant (D1, D2, D3) par la carte système (203) via le terminal (300, 105) :
• Si le débit montant mesuré (D1, D2, D3) est strictement supérieur à un seuil de débit montant dépendant du débit montant de référence, choix du débit montant mesuré (D1, D2, D3) comme débit montant de référence (106) ;
- Si le débit montant de référence est supérieur au débit montant initial, application à l'antenne (202), de la combinaison d'atténuations (1051_1, 1051_2, 1051_3) correspondant au débit montant de référence par le module d'atténuation (201, 109) :
o Mesure d'un débit descendant par la carte système (203) via le terminal (300, 110) :
• Si le débit descendant mesuré est supérieur ou égal à un seuil de débit descendant dépendant du débit descendant de référence, la combinaison d'atténuations (1051_1, 1051_2, 1051_3) appliquée correspond à la bande fréquentielle optimale en termes de débit.

2. Procédé (100) selon la revendication 1, **caractérisé en ce que**, si l'ensemble maximal de bandes fréquentielles comporte N bandes fréquentielles, la séquence (1050) de combinaisons d'atténuations (1051_1,1051_2,1051_3) comporte N combinaisons d'atténuations (1051_1, 1051_2, 1051_3), chaque combinaison d'atténuations (1051_1, 1051_2, 1051_3) comportant N-1 atténuations appliquées sur des bandes fréquentielles de l'ensemble maximal de bandes fréquentielles différentes.

3. Procédé (100) selon la revendication 1, **caractérisé en ce que** chaque combinaison d'atténuations (1051_1,1051 _2,1051 _3) comporte au plus deux atténuations appliquées sur des bandes fréquentielles de l'ensemble maximal de bandes fréquentielles différentes.

4. Procédé (100) selon l'une quelconque des revendications précédentes, **caractérisé en ce qu'**il comporte en outre une étape (107) d'identification de la bande fréquentielle optimale en termes de débit.

5. Procédé (100) selon l'une quelconque des revendications précédentes, **caractérisé en ce qu'**il est associé à au moins une information circonstancielle.

6. Procédé (100) selon les revendications 4 et 5, **caractérisé en ce qu'**il comporte une étape (108) de stockage de la bande fréquentielle optimale en termes de débit identifiée dans une base de données, la bande fréquentielle optimale en termes de débit étant associée à l'information circonstancielle dans la base de données.

7. Procédé (100) selon la revendication 6, **caractérisé en ce que** la séquence de combinaisons d'atténuations dépend de l'information circonstancielle associée ou de la ou des bande(s) fréquentielle(s) optimale(s) en termes de débit correspondant à l'information circonstancielle associée dans la base de données.

8. Procédé (100) selon l'une quelconque des revendications précédentes, **caractérisé en ce que**, pour la bande fréquentielle initiale et pour chaque combinaison d'atténuations (1051_1, 1051_2, 1051_3) appliquée, le débit montant et/ou descendant (D1, D2, D3, D0) est mesuré après un intervalle de temps prédéfini.

9. Procédé (100) selon l'une quelconque des revendications précédentes, **caractérisé en ce qu'**il est réalisé dès qu'une condition de répétition est remplie, la condition dépendant d'une horloge, d'un changement d'environnement détectable ou d'une variation de débit significative par rapport à un débit attendu.

10. Procédé (100) selon l'une quelconque des revendications précédentes, **caractérisé en ce qu'**il comporte une étape de forçage d'une sélection par le terminal (300), d'une bande fréquentielle parmi l'ensemble de bandes fréquentielles, après chaque application d'une combinaison d'atténuations (1051_1, 1051_2, 1051_3).

11. Système (500) pour la mise en oeuvre du procédé (100) selon l'une quelconque des revendications précédentes, le système comporte :
- un terminal (300) comportant au moins un port antennaire (301) configuré pour permettre un raccordement entre un système antennaire intelligent (200) et le terminal (300) ;
- un système antennaire intelligent (200) comportant :
∘ une antenne (202) ;
o un module d'atténuation (201) comportant :
• un atténuateur (2010) programmable configuré pour appliquer à l'antenne (202) une séquence (1050) de combinaisons d'atténuations (1051_1, 1051_2, 1051_3), chaque combinaison d'atténuations (1051_1, 1051_2, 1051_3) comportant au moins une atténuation du gain de l'antenne (202) sur une bande fréquentielle donnée ;
• un contrôleur (2013) configuré pour programmer l'atténuateur (2010) ;
o une carte système (203) configuré pour piloter le contrôleur (2013) et effectuer des mesures de débits montants et descendants via le terminal (300) quand le système (200) est connecté au terminal (300) via le port antennaire (301).

12. Système (500) selon la revendication 11, **caractérisé en ce que** l'atténuateur (2011) comporte au moins un filtre coupe-bande à brin (2011-1, 2011-2, 2011-3, 2011-4), et au moins une diode PIN (2012-1, 2012-2, 2012-3), le contrôleur (2013) étant configuré pour activer ou désactiver la diode PIN (2012-1, 2012-2, 2012-3) pour augmenter ou diminuer la longueur électrique du brin du filtre coupe-bande à brin (2011-1, 2011-2, 2011-3, 2011-4).

13. Système (500) selon la revendication 12, **caractérisé en ce que** l'atténuateur (2010) comporte une pluralité de filtres coupe-bande à brin (2011-1, 2011-2, 2011-3, 2011-4) en série.

14. Système (500) selon l'une quelconque des revendications 11 à 13, **caractérisé en ce que** l'antenne (202) comporte :
- un élément antennaire (2021) à spirale large bande ;
- une alimentation configurée pour alimenter l'élément antennaire (2021) via un câble coaxial (2023) ;
- une cavité (2022) comportant l'élément antennaire (2021) et un trou (2024) traversant ;
le câble coaxial (2023) étant configuré pour passer par le trou (2024) de manière que l'alimentation soit à l'extérieur de la cavité (2022).

15. Système (500) selon la revendication 14, **caractérisé en ce que** l'alimentation comporte un balun infini (2025).

## Patentansprüche

1. Verfahren (100), das die automatische Auswahl durch ein Endgerät (300) eines durchsatzoptimalen Frequenzbandes aus einem Satz von Frequenzbändern ermöglicht, die über das Endgerät (300) auswählbar sind, um eine Kommunikation mit einer Basisstation (400) aufzubauen, wobei der Satz von Frequenzbändern zu einem bekannten maximalen Satz von Frequenzbändern gehört, **dadurch gekennzeichnet, dass** das Endgerät (300) mit einem externen intelligenten Antennensystem (200) verbunden ist mit mindestens einer Antenne (202), einem Dämpfungsmodul (201) und einer Systemkarte (203), und dass das Verfahren (100) nach dem Empfang durch das Endgerät (300) mindestens einer Nachricht der Basisstation (400) mit einer Vielzahl von Regeln und Parametern, die vom Endgerät (300) anzuwenden sind, um ein Frequenzband aus dem Satz der Frequenzbänder auszuwählen, die folgenden Schritte umfasst:
- Auswahl eines ursprünglichen Frequenzbandes durch das Endgerät (300) aus dem Satz von Frequenzbändern durch Anwendung der Vielzahl von Regeln und Parametern (101);
- Messen eines ursprünglichen Upstream-Durchsatzes und eines ursprünglichen Downstream-Durchsatzes durch die Systemkarte (203) über das Endgerät (300) auf dem ursprünglichen Frequenzband (102);
- Auswahl des ursprünglichen Upstream-Durchsatzes als Referenz-Upstream-Durchsatz und des ursprünglichen Downstream-Durchsatzes als Referenz-Downstream-Durchsatz (103);
- Anwendung durch das Dämpfungsmodul (201) von mindestens einer Sequenz (1050) von Dämpfungskombinationen (1051_1, 1051_2, 1051_3) an der Antenne (202), wobei jede Dämpfungskombination (1051_1, 1051_2, 1051_3) mindestens eine Dämpfung des Antennengewinns (202) über ein gegebenes Frequenzband des maximalen Satzes von Frequenzbändern (104) umfasst:
o Für jede angewendete Dämpfungskombination (1051_1, 1051_2, 1051_3) Messung eines Upstream-Durchsatzes (D1, D2, D3) durch die Systemkarte (203) über das Endgerät (300, 105):
• Wenn der gemessene Upstream-Durchsatz (D1, D2, D3) strikt größer als ein Schwellenwert für den Upstream-Durchsatz ist, der vom Referenz-Upstream-Durchsatz abhängt, Auswahl des gemessenen Upstream-Durchsatzes (D1, D2, D3) als Referenz-Upstream-Durchsatz (106);
- Wenn der Referenz-Upstream-Durchsatz größer als der ursprüngliche Upstream-Durchsatz ist, Anwendung der Dämpfungskombination (1051_1, 1051_2, 1051_3) entsprechend dem Referenz-Upstream-Durchsatz durch das Dämpfungsmodul (201, 109) auf die Antenne (202):
o Messen eines Downstream-Durchsatzes durch die Systemkarte (203) über das Endgerät (300, 110):
• Wenn der gemessene Downstream-Durchsatz größer oder gleich einem Schwellenwert für den Downstream-Durchsatz ist, der vom Referenz-Downstream-Durchsatz abhängt, entspricht die angewendete Dämpfungskombination (1051_1, 1051_2, 1051_3) dem durchsatzoptimalen Frequenzband.

2. Verfahren (100) nach Anspruch 1, **dadurch gekennzeichnet, dass**, wenn der maximale Satz von Frequenzbändern N Frequenzbänder umfasst, die Sequenz (1050) von Dämpfungskombinationen (1051_1, 1051_2, 1051_3) N Dämpfungskombinationen (1051_1, 1051_2, 1051_3) umfasst, wobei jede Dämpfungskombination (1051_1, 1051_2, 1051_3) N-1 Dämpfungen umfasst, die auf unterschiedliche Frequenzbänder des maximalen Satzes von Frequenzbändern angewendet werden.

3. Verfahren (100) nach Anspruch 1, **dadurch gekennzeichnet, dass** jede Dämpfungskombination (1051_1, 1051_2, 1051_3) höchstens zwei Dämpfungen umfasst, die auf Frequenzbänder des maximalen Satzes von unterschiedlichen Frequenzbändern angewendet werden.

4. Verfahren (100) nach einem der vorhergehenden Ansprüche, **dadurch gekennzeichnet, dass** es außerdem einen Schritt (107) zur Identifizierung des durchsatzoptimalen Frequenzbandes umfasst.

5. Verfahren (100) nach einem der vorhergehenden Ansprüche, **dadurch gekennzeichnet, dass** es mit mindestens einer von den Umständen abhängigen Information verknüpft ist.

6. Verfahren (100) nach den Ansprüchen 4 und 5, **dadurch gekennzeichnet, dass** es einen Schritt (108) des Speicherns des identifizierten durchsatzoptimalen Frequenzbandes in einer Datenbank umfasst, wobei das durchsatzoptimale Frequenzband mit der von den Umständen abhängigen Information in der Datenbank verknüpft ist.

7. Verfahren (100) nach Anspruch 6, **dadurch gekennzeichnet, dass** die Sequenz von Dämpfungskombinationen von der zugehörigen und von den Umständen abhängigen Information oder dem/den durchsatzoptimalen Frequenzband(en) abhängt, das/die der zugehörigen und von den Umständen abhängigen Information in der Datenbank entspricht/entsprechen.

8. Verfahren (100) nach einem der vorhergehenden Ansprüche, **dadurch gekennzeichnet, dass** für das ursprüngliche Frequenzband und für jede angewendete Dämpfungskombination (1051_1, 1051_2, 1051_3) der Upstream- und/oder Downstreamdurchsatz (D1, D2, D3, D0) nach einem vordefinierten Zeitintervall gemessen wird.

9. Verfahren (100) nach einem der vorhergehenden Ansprüche, **dadurch gekennzeichnet, dass** es durchgeführt wird, sobald eine Wiederholungsbedingung erfüllt ist, wobei die Bedingung von einem Taktgeber, einer erfassbaren Umgebungsänderung oder einer signifikanten Änderung des Durchsatzes in Bezug zu einem erwarteten Durchsatz abhängt.

10. Verfahren (100) nach einem der vorhergehenden Ansprüche, **dadurch gekennzeichnet, dass** es einen Schritt des Auslösens einer Auswahl durch das Endgerät (300) eines Frequenzbandes aus der Gesamtheit der Frequenzbänder nach jeder Anwendung einer Dämpfungskombination (1051_1, 1051_2, 1051_3) umfasst.

11. System System (500) zur Durchführung des Verfahrens (100) gemäß einem der vorhergehenden Ansprüche, wobei das System umfasst:
- ein Endgerät (300) mit mindestens einem Antennenanschluss (301), der so konfiguriert ist, dass er eine Verbindung zwischen einem intelligenten Antennensystem (200) und dem Endgerät (300) ermöglicht;
- ein intelligentes Antennensystem (200) mit:
o einer Antenne (202);
o einem Dämpfungsmodul (201) mit:
• einem programmierbaren Dämpfungsglied (2010), das so konfiguriert ist, dass es auf die Antenne (202) eine Sequenz (1050) von Dämpfungskombinationen (1051_1, 1051_2, 1051_3) anwendet, wobei jede Dämpfungskombination (1051_1, 1051_2, 1051_3) mindestens eine Dämpfung des Antennengewinns (202) an einem gegebenen Frequenzband umfasst;
• einer Steuereinheit (2013), die so konfiguriert ist, dass sie das Dämpfungsglied (2010) programmiert;
o einer Systemkarte (203), die so konfiguriert ist, dass sie die Steuereinheit (2013) steuert und Messungen von Upstream- und Downstream-Durchsätzen über das Endgerät (300) durchführt, wenn das System (200) über den Antennenanschluss (301) mit dem Endgerät verbunden ist.

12. System (500) nach Anspruch 11, **dadurch gekennzeichnet, dass** das Dämpfungsglied (2011) mindestens ein Strang-Bandsperrfilter (2011-1, 2011-2, 2011-3, 2011-4) und mindestens eine PIN-Diode (2012-1, 2012-2, 2012-3) umfasst, wobei die Steuereinheit (2013) so konfiguriert ist, dass sie die PIN-Diode (2012-1, 2012-2, 2012-3) aktiviert oder deaktiviert, um die elektrische Länge des Strangs des Strang-Bandsperrfilters (2011-1, 2011-2, 2011-3, 2011-4) zu erhöhen oder zu verringern.

13. System (500) nach Anspruch 12, **dadurch gekennzeichnet, dass** das Dämpfungsglied (2010) eine Vielzahl von Strang-Bandsperrfiltern (2011-1, 2011-2, 2011-3, 2011-4) in Reihe aufweist.

14. System (500) nach einem der Ansprüche 11 bis 13, **dadurch gekennzeichnet, dass** die Antenne (202) Folgendes umfasst:
- ein spiralförmiges Breitband-Antennenelement (2021);
- eine Stromversorgung, die so konfiguriert ist, dass sie das Antennenelement (2021) über ein Koaxialkabel (2023) mit Strom versorgt;
- einen Hohlraum (2022), der das Antennenelement (2021) und ein Durchgangsloch (2024) umfasst;
wobei das Koaxialkabel (2023) so konfiguriert ist, dass es durch das Loch (2024) verläuft, so dass sich die Stromversorgung außerhalb des Hohlraums (2022) befindet.

15. System (500) nach Anspruch 14, **dadurch gekennzeichnet, dass** die Stromversorgung einen unendlichen Balun (2025) umfasst.

## Claims

1. A method (100) for automatically selecting, by a terminal (300), an optimum frequency band in terms of rate from a set of frequency bands selectable by the terminal (300) to establish a communication with a base station (400), the set of frequency bands belonging to a known maximum set of frequency bands, the terminal (300) is connected to an outer smart antenna system (200) including at least one antenna (202), an attenuation module (201) and a system card (203), and in that the method (100) includes, after the terminal (300) has received at least one message from the base station (400) including a plurality of rules and parameters to be applied by the terminal (300) in order to select a frequency band from the set of frequency bands, the following steps of:
- Selecting by the terminal (300) an initial frequency band from the set of frequency bands by applying the plurality of rules and parameters (101);
- Measuring an initial upstream rate and an initial downstream rate by the system card (203) via the terminal (300) on the initial frequency band (102);
- Selecting the initial upstream rate as the reference upstream rate and the initial downstream rate as the reference downstream rate (103);
- Applying by the attenuation module (201) at least one sequence (1050) of combinations of attenuations (1051_1, 1051_2, 1051_3) to the antenna (202), each combination of attenuations (1051_1, 1051_2, 1051 _3) including at least one attenuation of the gain of the antenna (202) over a given frequency band of the maximum set of frequency bands (104):
o For each combination of attenuations (1051_1, 1051_2, 1051_3) applied, measuring an upstream rate (D1, D2, D3) by the system card (203) via the terminal (300, 105):
• If the upstream rate (D1, D2, D3) measured is strictly greater than an upstream rate threshold depending on the reference upstream rate, selecting the upstream rate (D1, D2, D3) measured as the reference upstream rate (106);
- If the reference upstream rate is greater than the initial upstream rate, applying to the antenna (202) the combination of attenuations (1051_1, 1051_2, 1051_3) corresponding to the reference upstream rate by the attenuation module (201, 109):
o Measuring a downstream rate by the system card (203) via the terminal (300, 110):
• If the downstream rate measured is greater than or equal to a downstream rate threshold depending on the reference downstream rate, the combination of attenuations (1051_1, 1051_2, 1051_3) applied corresponds to the optimum frequency band in terms of rate.

2. The method (100) according to claim 1, **characterised in that**, if the maximum set of frequency bands includes N frequency bands, the sequence (1050) of combinations of attenuations (1051_1, 1051_2, 1051_3) includes N combinations of attenuations (1051_1, 1051_2, 1051_3), each combination of attenuations (1051_1, 1051_2, 1051_3) including N-1 attenuations applied to different frequency bands of the maximum set of frequency bands.

3. The method (100) according to claim 1, **characterised in that** each combination of attenuations (1051_1, 1051_2, 1051_3) includes at most two attenuations applied to different frequency bands of the maximum set of frequency bands.

4. The method (100) according to any of the preceding claims, **characterised in that** it further includes a step (107) of identifying the optimum frequency band in terms of rate.

5. The method (100) according to any of the preceding claims, **characterised in that** it is associated with at least one piece of circumstantial information.

6. The method (100) according to claims 4 and 5, **characterised in that** it includes a step (108) of storing the optimum frequency band in terms of rate identified in a database, the optimum frequency band in terms of rate being associated with the piece of circumstantial information in the database.

7. The method (100) according to claim 6, **characterised in that** the sequence of combinations of attenuations depends on the associated piece of circumstantial information or the optimum frequency band(s) in terms of rate corresponding to the associated piece of circumstantial information in the database.

8. The method (100) according to any of the preceding claims, **characterised in that**, for the initial frequency band and for each combination of attenuations (1051_1, 1051_2, 1051_3) applied, the upstream and/or downstream rate (D1, D2, D3, DO) is measured after a predefined time interval.

9. The method (100) according to any of the preceding claims, **characterised in that** it is carried out as soon as a repetition condition is met, the condition depending on a clock, a detectable change in environment or a significant variation in rate relative to an expected rate.

10. The method (100) according to any of the preceding claims, **characterised in that** it includes a step of forcing the terminal (300) to select one frequency band from the set of frequency bands 25 after each application of a combination of attenuations (1051_1, 1051_2, 1051_3).

11. A system (500) for implementing the method (100) according to any of the preceding claims, the system includes:
- a terminal (300) including at least one antenna port (301) configured to allow connection between a smart antenna system (200) and the terminal (300);
- a smart antenna system (200) including:
o an antenna (202);
o an attenuation module (201) including:
• a programmable attenuator (2010) configured to apply to the antenna (202) a sequence (1050) of combinations of attenuations (1051_1, 1051_2, 1051_3), each combination of attenuations (1051_1, 1051_2, 1051_3) including at least one attenuation of the gain of the antenna (202) over a given frequency band;
• a controller (2013) configured to program the attenuator (2010);
o a system card (203) configured to drive the controller (2013) and to perform measurements of upstream and downstream rates via the terminal (300) when the system (200) is connected to the terminal (300) via the antenna port (301).

12. The system (500) according to claim 11, **characterised in that** the attenuator (2011) includes at least one stranded band stop filter (2011-1, 2011-2, 2011-3, 2011-4), and at least one PIN diode (2012-1, 2012-2, 2012-3), the controller (2013) being configured to enable or disable the PIN diode (2012-1, 2012-2, 2012-3) to increase or decrease electrical length of the strand of the stranded band stop filter (2011-1, 2011-2, 2011-3, 2011-4).

13. The system (500) according to claim 12, **characterised in that** the attenuator (2010) includes a plurality of stranded band stop filters (2011-1, 2011-2, 2011-3, 2011-4) in series.

14. The system (500) according to any of claims 11 to 13, **characterised in that** the antenna (202) includes:
- a broadband spiral antenna element (2021);
- a power supply configured to supply the antenna element (2021) via a coaxial cable (2023);
- a cavity (2022) including the antenna element (2021) and a through hole (2024);
the coaxial cable (2023) being configured to pass through the hole (2024) so that the power supply is outside the cavity (2022).

15. The system (500) according to claim 14, **characterised in that** the power supply includes an infinite balun (2025).
